# EUROPEAN PATENT APPLICATION

(11) **EP 4 205 887 A1**
(43) Date of publication of application: **05.07.2023**
(21) Application number: 21861359.4
(22) Date of filing: 18.08.2021
(51) Int. Cl.: B22F 9/08, C22B 1/14, C22B 7/00, C22C 9/06, C22C 30/02, C22B 23/00, B22F 1/00

(54) **ATOMIZATION DEVICE, MANUFACTURING METHOD OF METAL POWDER, AND MANUFACTURING METHOD OF VALUABLE METAL**

(30) Priority: 28.08.2020 JP 2020144466; 26.05.2021 JP 2021088472
(71) Applicant: SUMITOMO METAL MINING CO., LTD., Tokyo 105-8716 (JP)
(72) Inventor: TOGASHI, Ryo, Niihama-shi, Ehime 792-0002 (JP)
(74) Representative: Jones, Nicholas Andrew
(86) International application number: PCT/JP2021/030236
(87) International publication number: WO 2022/044931

(57) **Abstract**

Provided is a technique for obtaining metal powder having little variation in particle size by stabilizing the supply amount of molten metal when manufacturing the metal powder by means of atomization. The present invention is an atomization device 1 for manufacturing metal powder by spraying a fluid to molten metal M, said device comprising: a tundish 11 into which the molten metal M is poured and discharged from a discharge nozzle 11N installed on a bottom part 11b; fluid spray nozzles 12 disposed below the tundish 11 and spraying the fluid to the molten metal M dropping from the tundish 11; a means for measuring a molten-metal surface height Mh inside the tundish 11 from an image obtained by imaging the inside of the tundish 11; and a means for, upon calculating an amount of the molten metal M to be poured into the tundish 11 from the molten-metal surface height Mh, discharging the molten metal in such a manner that the height is maintained substantially constant. The interior of the tundish 11 is formed in such a shape that the area of the molten-metal surface of the poured molten metal M increases with height in the vertical direction.

## Description

### TECHNICAL FIELD

The present invention relates to an atomizer, a method of producing a metal powder using the atomizer, and a method of producing a valuable metal.

### BACKGROUND ART

In recent years, lithium ion secondary batteries have become popular for their lightweight and high power. A lithium ion battery has a structure including: an outer case made of a metal such as aluminum or iron; a negative electrode material including a negative electrode current collector including a copper foil and a negative electrode active material such as graphite bonded to the current collector; a positive electrode material including a positive electrode current collector including an aluminum foil and a positive electrode active material such as lithium nickelate or lithium cobaltate bonded to the current collector; a separator including, for example, a porous organic resin film made of polypropylene; and an electrolytic solution containing an electrolyte such as lithium hexafluorophosphate (LiPF₆), in which the positive and negative electrode materials, the separator, and the electrolytic solution are sealed in the outer case.

Hybrid cars and electric vehicles are among the major applications of lithium ion batteries. After operating for a certain period, lithium ion batteries are discarded at the end of their lifetime or at the end of lifetime of such vehicles. According to the life cycle of such vehicles, a huge number of lithium ion batteries, which are now installed in them, are expected to be discarded in the future.

Many proposals have been made to reuse, as a resource, such used batteries and defective lithium ion batteries occurring in the manufacturing process (hereinafter such batteries will be collectively referred to as "discarded lithium ion batteries"). For example, Patent Document 1 discloses a method including: placing, on a mesh member, discarded lithium ion batteries each having an aluminum outer case; heating them at a temperature of at least approximately 660°C, which is the melting point of aluminum, to melt the aluminum material; and allowing the molten aluminum material to fall through the mesh while allowing the non-molten material, which is a component of the battery main body, to remain on the mesh member, so that the molten aluminum material is separated from the non-molten material.

A process including: adding, to discarded lithium ion batteries, a flux such as calcium oxide for lowering the melting point of a mixture containing aluminum oxide; and subjecting the resulting mixture to melting at 1,400°C or more in air enables production of oxide and alloy products separate from each other, in which the oxide product contains such metals as aluminum, calcium, and lithium, which are known to form oxides with a standard free energy of formation lower than that of carbon, and the alloy product includes such metals as copper, nickel, cobalt, and iron, which are known to form oxides with a standard free energy of formation higher than that of carbon. If possible, the alloy product should be subjected to an existing copper smelting process to separate copper from the alloy product, which is composed mainly of copper, nickel, cobalt, and iron, and to recover copper metal, which should be followed by an existing nickel smelting process and an existing cobalt smelting process to recover nickel metal and cobalt metal. This should allow for low-cost recovery of the valuable metals.

Unfortunately, subjecting a copper-nickel-cobalt-iron alloy to an existing copper smelting process causes distribution of cobalt and iron into an oxide product, which makes it difficult to recover elementary cobalt, although it enables separation and recovery of copper and nickel. Thus, other methods using an existing smelting process for recovering copper, nickel, and cobalt have been investigated, which include subjecting a copper-nickel-cobalt alloy to acid leaching to dissolve nickel and cobalt in a solvent and to separate copper as an undissolved residue. In general, some copper-nickel-cobalt alloy products are highly corrosion-resistant and remain insoluble in sulfuric acid for more than 24 hours depending on their particle size, shape, surface roughness, component distribution, and properties. Thus, there is a need for a copper-nickel-cobalt alloy product capable of being stably dissolved in acid.

As for such a copper-nickel-cobalt alloy product, for example, atomization has been proposed to form an alloy powder having an improved ability to be leached with acid.

Patent Document 1: Japanese Unexamined Patent Application, Publication No. H04-276006

### DISCLOSURE OF THE INVENTION

### Problems to be Solved by the Invention

Now, as a result of a study in which classified copper-nickel-cobalt alloy particles were evaluated for their ability to be leached with a sulfuric acid solution at a pH of 0.5 to 3, it has been found that fine particles with a size of less than 10 um vigorously react with concentrated sulfuric acid, which makes it difficult to control the adjustment of pH and concentration, whereas coarse particles with a size of more than 300 µm are hard to dissolve in the sulfuric acid solution.

Atomization of a molten metal, such as a molten copper-nickel-cobalt alloy, has been observed to produce a metal powder with what is called a bimodal size distribution. Whether the atomization is gas or water atomization, such a bimodal size distribution has a peak shifted toward the coarse side from the desired particle size. The metal powder with such a bimodal size distribution contains coarse particles, which cause a reduction in dissolution rate during acid leaching. Thus, such produced coarse particles must be removed by classification, which results in a reduction in productivity.

It has been found that a cause of the bimodal size distribution of the powder produced by atomization is the occurrence of two periods of time: one in which the surface level of the molten alloy in the tundish remains at the target level during atomization; and the other in which the surface level of the molten alloy in the tundish increases because of an excessive amount of the molten alloy being poured from the melting furnace, which causes a temporary increase in the supply of the molten alloy to the atomization unit so that the atomized particles have increased sizes.

In this regard, for example, Patent Document 1 discloses an atomization method that includes changing the pressure and flow rate of the spray jet while measuring the surface position (surface level) of the molten metal in the tundish so that the ratio between the flow rate of the jet and the flow rate of the molten metal is adjusted to remain constant. Patent Document 1 states that such a process during the atomization makes it easy to produce a powder with a desired particle size distribution and a desired particle size from the molten metal flowing down from the tundish.

The present invention has been made in light of the circumstances mentioned above. It is an object of the present invention to provide a technique for stabilizing the supply of a molten metal so that a metal powder (atomized powder) with less variation in particle size can be produced by atomization in the process of recovering valuable metals, such as copper, nickel, and cobalt, for example, from discarded lithium ion batteries.

### Means for Solving the Problems

(1) A first aspect of the present invention is directed to an atomizer for producing a metal powder by spraying a fluid onto a molten metal,
   the atomizer including: a tundish having an interior into which the molten metal is to be poured and having a discharge nozzle provided at its bottom to discharge the molten metal, at least the interior of the tundish being shaped such that when poured into the interior, the molten alloy has a surface area that increases as the surface shifts in the direction from the bottom to the top of the tundish;
   a fluid spray nozzle that is provided under the tundish to spray the fluid onto the molten metal falling from the tundish;
   a means for capturing an image of an interior of the tundish and for determining the surface level of the molten metal in the tundish from the image; and
   a means for calculating, from the determined surface level, the amount of the molten metal to be poured into the tundish and for pouring the calculated amount of the molten metal into the tundish in such a way as to keep the surface level substantially constant.
(2) A second aspect of the present invention is directed to the atomizer according to the first aspect, in which the means for determining the surface level of the molten metal in the tundish captures a thermal image from infrared radiation from an interior of the tundish and uses the thermal image to determine the surface level.
(3) A third aspect of the present invention is directed to the atomizer according to the first or second aspect, in which the fluid is high-pressure water, and the fluid spay nozzle sprays the high-pressure water.
(4) A fourth aspect of the present invention is directed to the atomizer according to any one of the first to third aspects, in which the molten metal includes copper, nickel, and cobalt, and the metal powder includes an alloy powder including copper, nickel, and cobalt as constituents.
(5) A fifth aspect of the present invention is directed to the atomizer according to the fourth aspect, in which the atomizer is for use in production of an alloy powder to be subjected to acid leaching in a process for recovering valuable metals from discarded lithium ion batteries.
(6) A sixth aspect of the present invention is directed to a metal powder production method including producing a metal powder by spraying a fluid onto a molten metal using an atomizer including:
   a tundish having an interior into which the molten metal is poured and having a discharge nozzle provided at its bottom to discharge the molten metal, at least the interior of the tundish being shaped such that when poured into the interior,
   the molten metal has a surface area that increases as the surface shifts in the direction from the bottom to the top of the tundish;
   a fluid spray nozzle that is provided under the tundish to spray the fluid onto the molten metal falling from the tundish;
   a means for capturing an image of an interior of the tundish and for determining the surface level of the molten metal in the tundish from the image; and
   a means for calculating, from the determined surface level, the amount of the molten metal to be poured into the tundish and for pouring the calculated amount of the molten metal into the tundish in such a way as to keep the surface level substantially constant.
(7) A seventh aspect of the present invention is directed to the metal powder production method according to the sixth aspect, in which the molten metal includes copper, nickel, and cobalt, and the metal powder is an alloy powder including copper, nickel, and cobalt as constituents.
(8) An eighth aspect of the present invention is directed to a method for producing valuable metals from discarded lithium ion batteries,
   the method including: producing an alloy powder including copper, nickel, and cobalt as constituents from a molten alloy derived from discarded lithium ion batteries;
   and subjecting the alloy powder to acid leaching.

In a step of producing the alloy powder, an atomizer which produces the alloy powder by spraying a fluid to the molten alloy is used, and,
the atomizer includes:
a tundish having an interior into which the molten alloy is poured and having a discharge nozzle provided at its bottom to discharge the molten alloy, at least the interior of the tundish being shaped such that when poured into the interior, the molten alloy has a surface area that increases as the surface shifts in the direction from the bottom to the top of the tundish;
a fluid spray nozzle that is provided under the tundish to spray the fluid onto the molten alloy falling from the tundish;
a means for capturing an image of an interior of the tundish and for determining the surface level of the molten alloy in the tundish from the image; and
a means for calculating, from the determined surface level, the amount of the molten alloy to be poured into the tundish and for pouring the calculated amount of the molten alloy into the tundish in such a way as to keep the surface level substantially constant.

### Effects of the Invention

The present invention provides an atomizer capable of stabilizing the supply of a molten metal from its tundish and capable of producing a metal powder with less variation in particle size from the molten metal.

Such an atomizer makes it possible to effectively produce, by atomization, a copper-nickel-cobalt alloy power having less variation in particle size and being capable of undergoing acid leaching in an easily controllable manner, for example, in a process for recovering valuable metals from discarded lithium ion batteries.

### BRIEF DESCRIPTION OF THE DRAWINGS

FIG. 1 is a diagram showing an example of the configuration of an atomizer;
FIG. 2 is a vertical sectional view of an example of the shape of the interior of a tundish;
FIG. 3 is a vertical sectional view of another example of the shape of the interior of a tundish;
FIG. 4 is a drawing showing the shape of the interior of a conventional cylindrical tundish; and
FIG. 5 is a vertical sectional view of the interior of a tundish, which is provided to illustrate its function in comparison with a tundish with a conventional shape.

### PREFERRED MODE FOR CARRYING OUT THE INVENTION

Hereinafter, specific modes of the present invention (hereinafter referred to as "embodiments") will be described. It should be noted that the embodiments described below are not intended to limit the present invention and may be altered or modified in various ways without departing from the gist of the present invention. In the present description, the expression "X to Y" (X and Y are any numerical values) for indicating any numerical range has the same meaning as "X or more and Y or less".

### 1. Atomizer

### 1-1. Outline

The atomizer is a device that produces a metal powder by performing a process including: spraying a fluid, such as high-pressure water or gas, onto a molten metal to crush it into dispersed molten droplets; and solidifying the dispersed molten droplets. As used herein, the term "molten droplets" refers to a molten metal in the form of droplets (molten metal droplets). The resulting metal powder is also referred to as "atomized powder".

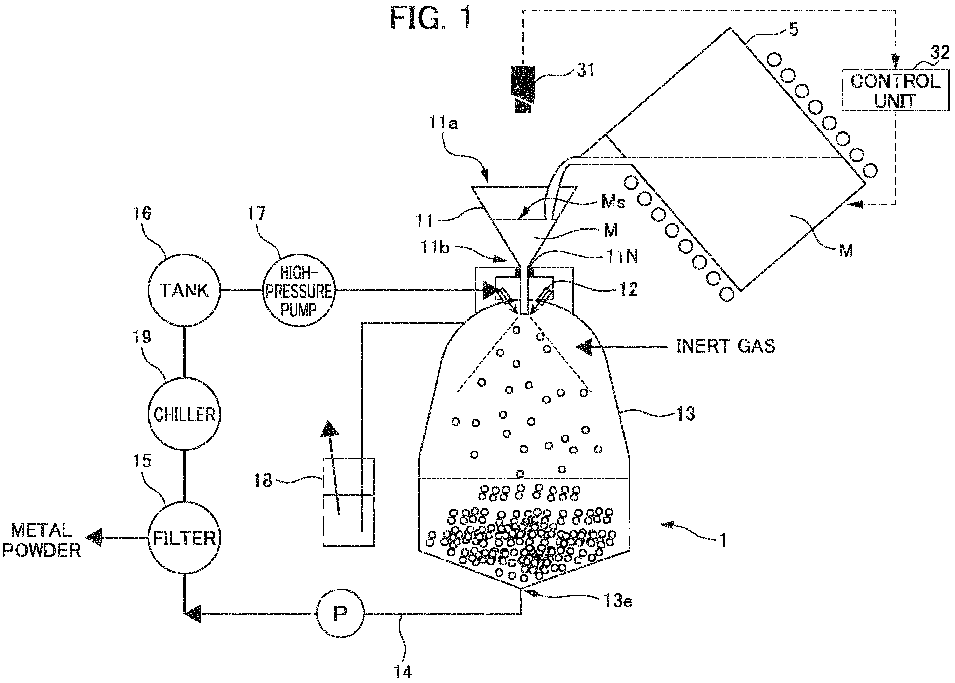

FIG. 1 is a diagram showing an example of the configuration of an atomizer according to an embodiment of the present invention. The atomizer 1 includes: a tundish 11 that receives a molten metal M from a melting furnace (crucible furnace) 3 and discharges the the molten metal M; fluid spray nozzles 12 that spray a fluid onto the molten metal M falling from the tundish 11; and a chamber 13 provided with the fluid spray nozzles 12 at its top and having a space in which a metal powder is to be produced when the fluid is sprayed onto the molten metal to crush the molten metal into molten droplets.

In the atomizer 1, at least the interior of the tundish 11 is shaped such that when poured into the interior, the molten metal M has a surface area that increases as the surface shifts in the direction from the bottom to the top of the tundish.

The atomizer 1 also includes: a measurement unit 31 that determines the level of the surface Ms of the molten metal M in the tundish 11 (the surface level Mh); and a control unit 32 that controls the amount of the molten metal M being poured into the tundish 11 on the basis of the surface level Mh determined by the measurement unit 31.

The measurement unit 31 captures an image of an interior of the tundish 11 so as to acquire an image of the surface Ms of the molten metal M in the tundish 11 and determines the surface level Mh from the image. For example, the measurement unit 31 preferably captures a thermal image from infrared radiation from the interior of the tundish 11. The measurement unit 31 captures the image of the surface Ms in the tundish 11 and then calculates the area of the surface Ms. In the atomizer 1, the interior of the tundish 11 is shaped such that when poured into the interior, the molten metal M has a surface area Ms that increases as the surface shifts in the direction from the bottom to the top of the tundish 11. This feature allows accurate determination of the surface level Mh because the area of the surface Ms varies as the surface level Mh increases or decreases so that the surface level Mh is successfully detected according to the variation in the area of the surface Ms.

The surface level Mh in the tundish 11 may be determined by a method using reflection of sound waves or light. In such a case, however, the surface level Mh may fail to be determined accurately because of influences such as the ruffling of the surface Ms of the molten metal M poured and the thermal current occurring above the surface Ms of the molten metal M at a high temperature. In this regard, the measurement unit 31 determines the surface level Mh accurately and efficiently without being influenced by various factors since it captures an image of the surface Ms of the molten metal M in the tundish 11 and calculates the area of the surface Ms from the image to determine the surface level Mh.

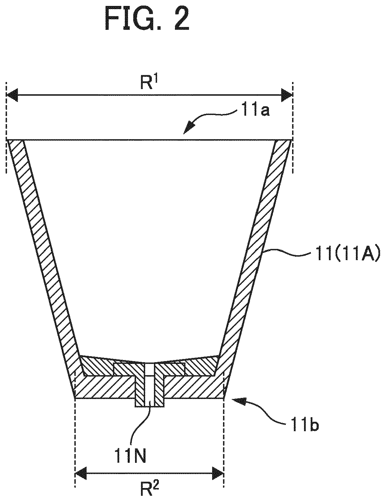

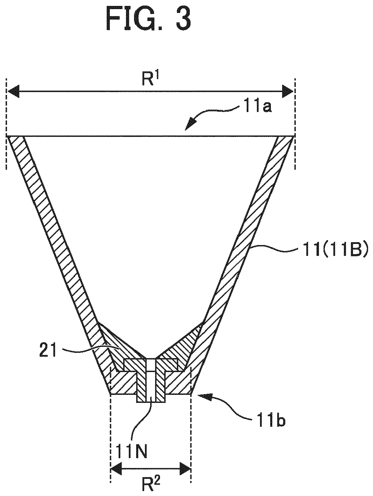

FIGS. 2 and 3 show the shape of tundishes having an opening with a diameter R1 and a bottom with a diameter R2 and having different ratios between the opening and bottom diameters R1 and R2 (tundish 11A and tundish 11B, respectively). The ratio R2/R1 of the bottom diameter R2 to the opening diameter R1 is preferably, but not limited to, 0.25 or more and 0.65 or less, more preferably 0.30 or more and 0.55 or less. In such a preferred mode of the tundish 11 with such a ratio, fluctuations, if any, in the surface level Mh can be detected easily and accurately.

The atomizer 1 with such features keeps substantially constant the surface level of the molten metal M in the tundish 11 and thus stabilizes the supply of the molten metal M from the tundish 11. Thus, the stabilization of the supply of the molten metal M results in less variation in the particle size of the metal powder produced by spraying a fluid onto the molten metal M.

The atomizer 1 is suitable for use as a device for producing, from the molten metal (molten alloy) M including copper (Cu), nickel (Ni), and cobalt (Co), an alloy powder (copper-nickel-cobalt alloy powder) to be subjected to leaching with acid (acid leaching), for example, in a process for recovering valuable metals from discarded lithium ion batteries. In other words, the atomizer 1 makes it possible to effectively produce an alloy powder with less variation in particle size from the molten alloy M being supplied in a stable amount from the tundish 11, and thus the acid leaching of such an alloy powder will produce valuable metals, such as Ni and Co, with effectively improved leaching efficiency.

The atomizer 1 shown in FIG. 1 is a water atomizer in which the fluid sprayed from the fluid spray nozzles 12 is high-pressure water. Hereinafter, the water atomizer will be further described by way of example. It should be noted, however, that a gas atomizer in which a gas is used as the fluid will also be advantageously used. FIG. 1 also shows a melting furnace 5 from which the molten metal M is poured into the tundish 11, although it is not a component of the atomizer 1.

### 1-2. Each Component of the Atomizer

### Tundish

The tundish 11 has an interior that stores the molten metal M, which is poured from the melting furnace 5. The tundish 11 has a discharge nozzle 11N that is provided at its bottom 11b to discharge the molten metal M into the chamber 13. The molten metal M being discharged from the tundish 11 is allowed to freely fall through the discharge nozzle 11N and to come into the chamber 13.

It should be noted that with respect to the expression "the molten metal M being discharged through the nozzle 11N into the chamber 13", the term "discharged" is interchangeable with the term "supplied". As will be described in detail below, the molten metal M freely falling from the discharge nozzle 11N is allowed to collide with high-pressure water being sprayed from the fluid spray nozzles 12, which are provided at the top of the chamber 13, and thus crushed into molten droplets, which are dispersed in the chamber 13.

At least the interior of the tundish 11 is shaped such that the molten metal M, which is poured from the melting furnace 5 and stored in the interior, has a surface area that increases as the surface shifts in the direction from the bottom to the top of the tundish 11. The direction from the bottom to the top corresponds to the direction from the bottom to the top of FIG. 1, which is the vertical direction of the tundish 11, of which a vertical sectional view is shown in FIG. 1. In other words, the direction from the bottom to the top corresponds to the direction in which the molten metal M gradually accumulates toward the opening 11a at the top from the bottom 11b in the tundish 11. The surface of the molten metal M, which is represented by the sign "Ms" in FIG. 1, refers to the top surface of the molten metal M poured and stored in the tundish 11. For example, in a case where the interior of the tundish 11 is in the shape of an inverted truncated cone, the surface of the molten metal M is substantially circular. The area of the surface Ms refers to the area of the top surface of the molten metal M. The opening 11a refers to an inlet that is provided at or near the top of the tundish 11 to receive the molten metal M from the melting furnace 5.

FIGS. 2 and 3 are each a vertical sectional view of the interior of the tundish 11, which show examples of the shape of the interior. As shown in each drawing, the interior of the tundish 11 is in the shape of, for example, an inverted truncated cone or an inverted cone. The interior of the tundish 11 is shaped such that the area of the surface Ms of the molten metal M gradually increases as the surface shifts in the direction from the bottom 11b to the opening 11a at the top, namely, as the level of the surface Ms (the surface level Mh) of the molten metal M poured increases.

In the tundish 11 with such an interior shape, for example, the surface level Mh of the molten metal M can be kept substantially constant at a predetermined target level. In other words, the interior shape of the tundish 11, which allows the area of the surface Ms to increase as the surface level Mh increases, will retard changes in the surface level Mh of the molten metal M poured in the process in which the molten metal M is supplied through the discharge nozzle 11N of the tundish 11 while the molten metal M is newly poured continuously at a constant rate from the melting furnace 5 into the tundish 11. Thus, the surface level Mh of the molten metal M can be kept substantially constant, for example, at a target level. The rate at which the molten metal M is poured from the melting furnace 5 into the tundish 11 is kept at a substantially constant rate. The molten metal M may be poured into the tundish 11, for example, by tilting the melting furnace 5 (see FIG. 1).

The atomizer 1 has a measurement unit 31 that determines the surface level Mh of the molten metal M in the tundish 11. The atomizer 1 also has a control unit 32 that automatically controls the tilt angle of the melting furnace 5 to adjust, based on the determined surface level Mh, the amount of the molten metal M being poured into the tundish 11 in such a way as to keep the surface level Mh substantially constant at a predetermined level. This will keep the surface level Mh of the molten metal M constant with higher accuracy.

The supply (supply rate) of the molten metal M from the discharge nozzle 11N depends on the pressure based on the surface level of the molten metal M in the tundish 11. Therefore, keeping the surface level substantially constant will stabilize, at a substantially constant level, the amount of the molten metal M supplied per unit time from the discharge nozzle 11N, depending on the nozzle diameter.

The supply of the molten metal M may be set to a suitable level depending on conditions such as the particle size of the metal powder to be produced and the amount of spray of high-pressure water from the fluid spray nozzles 12 described later. For example, the supply of the molten metal M may be set in the range of approximately 10 kg/minute or more and approximately 75 kg/minute or less.

After being supplied into the chamber 13 through the discharge nozzle 11N, the molten metal M is allowed to collide with high-pressure water being sprayed from the fluid spray nozzles 12, which are provided at the top of the chamber 13, and thus turned into dispersed molten droplets. In this process, changes in the supply of the molten metal M from the tundish 11 may cause changes in the size of droplets being formed, which may cause variation in the particle size distribution of the metal powder (atomized powder) produced within a predetermined period of time. For example, an increase in the surface level of the molten metal M, which is poured from the melting furnace 5, may cause an increase in the supply of the molten metal M from the discharge nozzle N. This may lead to an increase in the size of molten droplets formed upon the collision of high-pressure water being sprayed at a constant rate, which may result in the production of a metal powder having relatively large particle sizes and having variation in particle size, such as bimodal particle size distribution.

In this regard, the interior shape of the tundish 11 described above can keep the surface level of the poured molten metal M substantially constant and thus stabilize the supply of the molten metal M. This leads to less variation in the size of molten droplets formed upon the collision of high-pressure water and thus results in the production of a metal powder with a sharp unimodal particle size distribution.

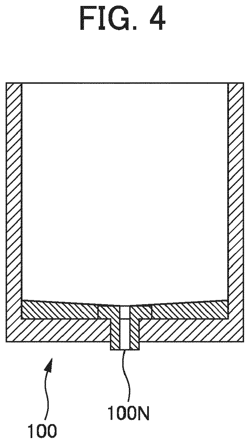

After the completion of the pouring of the molten metal M from the melting furnace 5 into the tundish 11, the surface level of the molten metal M gradually decreases as the amount of the molten metal M in the tundish 11 decreases. In this stage, the supply of the molten metal, for example, from the discharge nozzle 100N of a conventional tundish 100 having a cylindrical interior shape as shown in FIG. 4 gradually decreases as the surface level of the molten metal decreases. In this case, as the supply of the molten metal decrease, the size of molten droplets decreases during the formation of molten droplets through the collision of high-pressure water being sprayed at a constant rate, which results in the production of a metal powder having relatively small particle sizes and having variation in particle size, such as bimodal particle size distribution. The interior of the tundish 100 shown in FIG. 4 has a cylindrical shape, which is not such that the surface area of the molten metal increases as its surface level increases, but such that the surface area of the molten metal is constant regardless of its surface level.

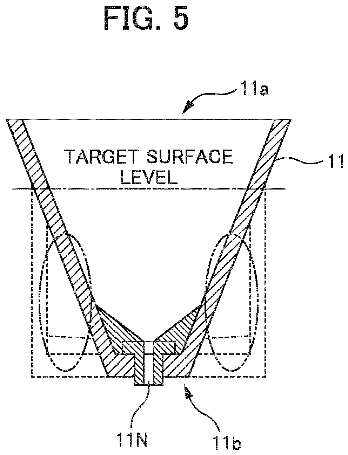

In this regard, as shown in FIG. 5, in contrast to the cylindrical interior shape of the tundish (as shown by the imaginary line), the interior shape of the tundish 11 described above does not have the portion that can cause the decrease in the supply of the molten metal M, which is surrounded by the broken line in the drawing. In the tundish 11, therefore, even a gradual decrease in the surface level of the molten metal M causes only a small change in the pressure based on the surface level of the molten metal M, so that the supply of the molten metal M remains stable. The possible stabilization of the supply of the molten metal M will reduce variation in the size of molten droplets formed upon the collision of high-pressure water, which will result in the production of a metal powder with a sharp unimodal particle size distribution.

Thus, the tundish 11 stabilizes the supply of the molten metal M from the discharge nozzle 11N not only in the main stage in which the molten metal M is continuously poured from the melting furnace 5 into the interior but also in the final stage in which the surface level of the molten metal M gradually decreases after the completion of the pouring of the molten metal M.

As mentioned above, the atomizer 1 includes: the measurement unit 31 that determines the surface level Mh of the molten metal M in the tundish 11; and the control unit 32 that automatically controls the tilt angle of the melting furnace 5 to adjust, based on the determined surface level Mh, the amount of the molten metal M being poured into the tundish 11 in such a way as to keep the surface level Mh substantially constant at a predetermined level. These features keep the surface level Mh of the molten metal M constant with higher accuracy and thus more effectively stabilize the supply of the molten metal M from the tundish 11.

The interior of the tundish 11 may be in the shape of, for example, an inverted truncated cone or an inverted cone, as shown in FIG. 2 or 3 (tundish 11A or 11B). The interior of the tundish 11 may be shaped so as to have an opening 11a with a diameter R¹ (opening diameter) at its top, have a bottom 11b with a diameter R² (bottom diameter), with the opening diameter R¹ being larger than the bottom diameter R², and thereby shaped such that the area of the surface of the molten metal M in the interior gradually increases as the surface level of the molten metal M increases. As a matter of course, the interior of the tundish 11 may have an inclined wall surface, such as an inverted truncated cone- or inverted cone-shaped surface, at its portion where the surface of the molten metal M is to be located (not shown), as shown in the vertical sectional views (FIGS. 2 and 3).

The tundishes 11A and 11B shown in FIGS. 2 and 3 respectively are tundish examples having different ratios between the opening diameter R¹ and the bottom diameter R². The ratio of R² to R¹ (the R²/R¹ ratio) is preferably, but not limited to, approximately 0.25 or more and approximately 0.65 or less, more preferably approximately 0.30 or more and approximately 0.55 or less. The tundish with an R²/R¹ ratio of less than 0.25 may have a small inner volume and give a low atomization efficiency although it can keep the surface level of the molten metal substantially constant at a target level. The tundish with an R²/R¹ ratio of more than 0.65 may have a shape close to the cylindrical shape as shown in FIG. 4 and thus may hardly stabilize the surface level of the molten metal.

As shown in FIG. 3, the tundish 11B with an interior in the shape of an inverted truncated cone may have a slope portion 21 at its bottom 11b. The slope portion 21 has a slope downward to the discharge nozzle 11N attached to the bottom 11b. The slope portion 21 is provided at the interior of the tundish 11B. The slope portion 21 having a slope downward to the discharge nozzle 11N is more effective in retarding the decrease in the supply of the molten metal M through the discharge nozzle 11N in the stage in which the surface level of the molten metal M gradually decreases after the completion of the pouring of the molten metal M. This will further stabilize the supply and result in the production of a metal powder with less variation in particle size.

The tundish 11 may be made of any suitable material, such as alumina. The discharge nozzle 11N provided at the bottom 11b of the tundish 11 may also be made of any suitable material, such as zirconia. The discharge nozzle 11N may have any suitable diameter, such as approximately 3 mm to approximately 10 mm, which may be selected depending on the type (composition) of the molten metal, the discharge amount of the molten metal, or other conditions.

The opening 11a of the tundish 11 shown in FIGS. 1 to 3 is a fully open type, which is non-limiting. As mentioned above, the opening 11a refers to an inlet that is provided at or near the top of the tundish 11 to receive the molten metal M from the melting furnace 5. The opening 11a may be any type provided at or near the top of the tundish 11 to receive the molten metal M from the melting furnace 5. Even in such a case, the opening 11a also refers to a top portion of the tundish 11 defining the opening.

### Fluid Spray Nozzle

The fluid spray nozzles 12 are located at the top (ceiling) of the chamber 13 (described later) and spray high-pressure water (fluid) onto the molten metal M freely falling from the discharge nozzle 11N of the tundish 11. An atomization section is provided at the location where the fluid spray nozzles 12 are provided to spray high-pressure water onto the molten metal M so that the molten metal M is crushed into molten droplets.

The high-pressure water, which is the fluid, is a medium for crushing the molten metal M. Although the embodiment is shown with an example in which high-pressure water is used as the fluid, the fluid may alternatively be a gas, such as air or an inert gas such as nitrogen or argon. In that case, the atomizer is a gas atomizer for producing a metal powder using a high-pressure gas as the fluid. The shape of the tundish 11 described above is suitable for both the water atomizer and the gas atomizer.

The fluid spray nozzles 12 may have any structure and shape that allows high-pressure water to be sprayed in a desired amount onto the molten metal M. Preferably, an even number of fluid spray nozzles 12 (e.g., two, four, or six fluid spray nozzles 12) are arranged so as to form a pair of two nozzles facing each other around the falling molten metal M located on the central axis. The fluid spray nozzles 12 may be adjusted such that the angle (spray angle) between high-pressure water being sprayed and the falling molten metal M is adjusted to maximize the yield of the metal powder product. For example, the relative angle (apex angle) between high-pressure water sprays from the facing pair of nozzles 12 may be adjusted to 30° to 50° so that the water spray makes an angle (vertical angle) of 15° to 25° with respect to the falling molten metal M.

The conditions under which high-pressure water is sprayed from the fluid spray nozzles 12 are preferably set as appropriate depending on the particle size of the metal powder to be produced and other factors.

Specifically, regarding the spray conditions, the high-pressure water is preferably sprayed at a pressure of, for example, approximately 6 MPa or more and approximately 20 MPa or less. A spray pressure of less than 6 MPa may lead to the production of a metal powder with excessively large particle sizes. A spray pressure of more than 20 MPa may make the metal powder excessively fine, so that the ability to separate and collect the powder will be low. Moreover, spraying water at a higher pressure requires using a more expensive pump and increases the metal powder production cost.

The mass ratio (water-to-molten metal ratio) of the amount of the high-pressure water spray to the supply of the molten metal M (the amount of the falling molten metal M) is preferably set at, for example, approximately 5.0 or more and approximately 7.0 or less. The supply of the molten metal M is the average amount of the molten metal M being supplied per unit time, and the amount of the high-pressure water spray is the average amount of high-pressure water being sprayed per unit time. This means that the supply of the molten metal M and the amount of the high-pressure water spray may vary with time and that in such a case, the averages may be used. A water-to-molten metal ratio of less than 5.0 may lead to the production of a metal powder with excessively large particle sizes, and a water-to-molten metal ratio of more than 7.0 may make the metal powder excessively fine.

The temperature of the high-pressure water being sprayed is preferably set to, for example, approximately 2°C or more and approximately 35°C or less. An excessively low water temperature may cause the water to freeze in the piping, if the facility ceases to operate, and may cause a problem such as water leak. An excessively high water temperature will tend to increase the particle size of the metal powder product. The temperature of the high-pressure water may be controlled using a chiller 19 or other equipment provided to adjust the temperature setting.

### Chamber

At the position where the discharge nozzle 11N is located, the chamber 13 is connected to the tundish 11 to receive the supply of the molten metal M from the tundish 11 through the discharge nozzle 11N. The chamber 13 is provided with the fluid spray nozzles 12 at its top, which spray high-pressure water onto the molten metal M freely falling from the discharge nozzle 11N to form the molten metal M into molten droplets, which give a metal powder product.

Specifically, in the chamber 13, high-pressure water being sprayed onto the molten metal M falling through the discharge nozzle 11N crushes the molten metal M into molten droplets. The molten droplets produced are allowed to disperse and fall toward the bottom in the chamber 13. The molten droplets produced are also cooled by the high-pressure water and then allowed to cool and rapidly solidify into a metal powder during the period when they disperse and fall in the chamber 13. In the atomizer 1 for water atomization, the water sprayed from the fluid spray nozzles 12 accumulates to form a water phase at the bottom of the chamber 13. The molten droplets solidifying into a metal powder are allowed to fall into the water phase and cooled in it.

In the chamber 13, the angle (spray angle) at which the high-pressure water is sprayed onto the molten metal M is adjusted to maximize the yield of the metal powder product. As mentioned above, the amount of the molten metal falling per unit time, the amount of high-pressure water being sprayed per unit time, the pressure of water being sprayed, the temperature of high-pressure water, and other conditions may be set as appropriate depending on the metal powder yield, the desired particle size of the metal powder, and other factors.

The chamber 13 has a structure that keeps its internal pressure higher than the atmospheric pressure by allowing an inert gas, such as nitrogen gas, to flow into it, and thus prevents the air from entering its interior. The chamber 13 is connected to a gas discharge structure 18 so that the gas filled in the chamber 13, such as hydrogen gas, can be discharged to the outside without air inflow.

The chamber 13 is provided with an outlet 13e for discharging a slurry including the metal powder. The metal powder is collected through a collection pipe 14 connected to the outlet 13e.

### Measurement Unit

The measurement unit 31 is provided, for example, above the tundish 11, to determine the surface level Mh of the molten metal in the tundish 11. The measurement unit 31 captures an image of an interior of the tundish 11 to take an image of the surface Ms of the molten metal M in the tundish 11. As mentioned above, the interior of the tundish 11 is shaped such that the area of the surface Ms of the molten metal M poured in the interior increases as the surface Ms shifts in the direction from the bottom to the top. This feature allows accurate determination of the surface level Mh since the area of the surface Ms changes as the surface level Mh changes upward or downward.

The measurement unit 31 includes such a device as a video camera or a thermographic device. In particular, the measurement unit 31 preferably includes a thermographic device that captures a thermal image from infrared radiation from the interior of the tundish 11. Alternatively, the surface level Ms may be determined by a method using reflection of sound waves or light. In some cases, however, such a method is difficult to utilize because of influences such as the ruffling of the surface Ms of the molten metal M caused by the pouring and the thermal current occurring from the molten metal M at a high temperature.

More specifically, the measurement unit 31 may be provided above the tundish 11 in the atomizer 1. For example, a thermographic device may be provided as the measurement unit 31 above the tundish 11 to clearly observe the contour of the top surface of the molten metal M in the tundish 11 and to capture a thermal image of temperature distribution by detecting infrared radiation from the interior of the tundish 11. The top surface of the molten metal M is observed in the shape of a circle since the tundish 11 is shaped, for example, in an inverted truncated cone, such that the surface area of the molten metal M increases in the direction from the bottom to the top. Thus, an arithmetic expression of the relationship between the diameter of the circle and the surface level Mh of the molten metal M may be created in advance and used to calculate the surface level Mh of the molten metal M in the tundish 11 from the diameter of the circle. In this way, the measurement unit 31 uses a simple method of capturing an image of the contour of the top surface of the molten metal M in the tundish 11 to accurately calculate the surface level Mh.

For example, the measurement unit 31 may perform image processing to convert, into a binary or multivalued image, the image of the top surface of the molten metal M in the tundish 11 in order to clarify the contour of the top surface of the molten metal M. In this case, the area of the circle may be digitized to create an arithmetic expression of the relationship between the area of the circle and the surface level Mh of the molten metal M in advance. Alternatively, the tundish 11 may be in the shape of an inverted truncated four-sided pyramid. In this case, the surface level Mh of the molten metal M may be calculated from the area of the tetragon. Alternatively, for example, the observed shape of the top surface of the molten metal M may be divided into meshes, and the number of the meshes may be counted, or the distance between parallel lines tangent to the contour may be measured as the size of the top surface. In any case, the surface level Mh of the molten metal M can be determined only by using an approximate expression of the relationship between the measurement and the surface level Mh, which is created in advance.

The measurement unit 31 including such a device as a video camera or a thermographic device, which is provided, for example, above the tundish 11, is sensitive to the influence of the thermal radiation or current from the tundish 11. In this regard, a light protecting glass, a heat ray shielding glass, or any other member that hinders the transmission of infrared rays may be provided between the tundish 11 and the video camera or the thermographic device to reduce the influence of thermal radiation. Alternatively, in order to avoid the thermal current from the interior of the tundish 11, the contour of the top surface of the molten metal M in the tundish 11 in the shape of an inverted cone may be observed from obliquely above (not directly above) the tundish 11 so that it is observed as an ellipse (not a circle), or the area of the top surface of the molten metal M in the tundish 11 in the shape of an inverted truncated four-sided pyramid may be approximately calculated as the area of, for example, a square, a rectangle, or a trapezoid. This can also avoid a situation where the temperature of the video camera or thermographic device itself rises to a level that makes the measurement impossible.

Even in a case where the molten metal M being poured and falling is reflected in the captured image, the surface level Mh of the molten metal M can be adequately calculated from the observable area, for example, as long as the observable area is 1/2 or more of the area of the top surface of the molten metal M in the tundish 11.

After being determined by the measurement unit 31, the information representing the value of the surface level Mh of the molten metal M is sent to the control unit 32 described later, which then controls the amount of the molten metal M being poured from the melting furnace 5 into the tundish 11 in such a way that the surface level Mh of the molten metal M in the tundish 11 remains substantially constant at a predetermined level. Once the measurement unit 31 determines the surface level Mh of the molten metal M in the tundish 11, the control unit 32 will calculate how much the surface level Mh is higher or lower than the target level and then appropriately control the amount of the molten metal M being poured from the melting furnace 5 to reduce the calculated difference between the surface level Mh and the target level.

### Control Unit

The control unit 32 acquires the information representing the surface level Mh of the molten metal M in the tundish 11, which is determined by the measurement unit 31, and then controls the amount of the molten metal M being poured into the tundish 11 in such a way as to keep the surface level Mh substantially constant.

For example, the melting furnace 5 is tilted to pour the molten metal M from the melting furnace 5 into the tundish 11 (see FIG. 1). In the atomizer 1, the measurement unit 31 determines the surface level Mh of the molten metal M in the tundish 11 and sends the information representing the surface level Mh to the control unit 32, which then automatically controls the tilt angle of the melting furnace 5 to control the amount of the molten metal M being poured into the tundish 11 in such a way that the surface level Mh remains substantially constant at a predetermined level. As a result, the surface level Mh of the molten metal M remains constant with high accuracy.

More specifically, for example, the control unit 32 controls a tilting device to control the tilt angle of the melting furnace 5 on the basis of the information representing the surface level Mh of the molten metal M in the tundish 11, which is sent from the measurement unit 31. For example, to control the tilt of the melting furnace 5, the control unit 32 controls the supply of hydraulic oil for driving the hydraulic cylinder of the tilting device and controls the release of the hydraulic pressure.

Upon determining that the determined surface level Mh is lower than the lower limit of the target level, for example, the control unit 32 drives the hydraulic oil pump of the tilting device to increase the tilt angle of the melting furnace 5 and thus to increase the amount of the molten metal M being poured, so that the surface level Mh of the molten metal M is automatically raised to the target level. Upon determining that the surface level reaches the upper limit of the target level, the control unit 32 causes the tilting device to drain the hydraulic oil from the hydraulic cylinder and thereby to release the hydraulic pressure, so that the tilt of the melting furnace 5 is reduced to reduce the amount of the molten metal M being poured. These operations may be repeated to adjust the surface level Mh between the upper and lower limit levels and thereby to keep constant the amount of the molten metal falling per unit time from the tundish 11.

### Other Components

The atomizer 1 has a filter 15 connected to another end of the collection pipe 14. The filter 15 performs solid-liquid separation on the slurry containing the metal powder, which is being discharged through the collection pipe 14, so that the metal powder (the solid fraction of the slurry) is separated and collected. The water resulting from the separation of the metal powder by the filter 15 is stored in a tank 16 connected to the filter 15 through a pipe. After being subjected to temperature control by the chiller 19 and other components, the water is circulated and supplied to the fluid spray nozzles 12 by a high-pressure pump 17. The fluid spray nozzles 12 are configured to apply a pressure to the circulated water and reuse the resulting high-pressure water for the crushing of the molten metal M.

### 2. Method of Recovering Valuable Metals

Next, a valuable metal recovery method will be described including the step of producing an alloy powder including Cu, Ni, and Co as constituents using the atomizer 1 configured as described above.

The valuable metal recovery method according to an embodiment is a method of recovering valuable metals from discarded lithium ion batteries. Specifically, the valuable metal recovery method includes the steps of: (S1) pretreating discarded lithium ion batteries (discarded battery pretreatment step); (S2) preparing a molten alloy (a molten alloy including Cu, Ni, and Co) M by melting the pretreated discarded lithium ion batteries (molten alloy preparation step); (S3) producing an alloy powder by spraying a fluid onto the molten alloy M (alloy powder production step); and (S4) subjecting the resulting alloy powder to acid leaching (acid leaching step).

The alloy powder production step S3 is characterized by using the atomizer 1 configured as described above. The alloy powder production step S3 includes producing an alloy powder by atomization using the atomizer 1, which keeps substantially constant the surface level of the molten alloy M in the tundish 11 and thus stabilizes the supply of the molten alloy M from the tundish 11. Thus, the fluid is sprayed onto the molten alloy M being supplied in a stable amount so that a metal powder with less variation in particle size is produced.

It has been found that in a method of recovering valuable metals from discarded lithium ion batteries, including subjecting an alloy powder including Cu, Ni, and Co as constituents (copper-nickel-cobalt alloy powder) to acid leaching to selectively leach Ni and Co into a solution, variation in the particle size of the alloy powder affects the efficiency of the acid leaching. In some cases, almost no particles are soluble in the acid, depending on the form of the particles, including particle size distribution. In this regard, the alloy powder production step S3 including atomization using the atomizer 1 produces an alloy powder with a sharp particle size distribution with less variation in particle size, which undergoes acid leaching with an effectively improved leaching efficiency.

### Discarded Battery Pretreatment Step

The discarded battery pretreatment step S1 includes pretreating discarded lithium ion batteries, which are raw materials for recovery of valuable metals. The term "pretreatment" refers to treatment performed prior to the molten alloy preparation step S2, which includes melting the raw materials to form a molten alloy. As used herein, the term "discarded lithium ion batteries" is intended to include not only used batteries but also defective batteries occurring in the battery manufacturing process.

Specifically, the discarded battery pretreatment step S1 includes a detoxification step 511, which includes detoxifying discarded lithium ion batteries, and a crushing step S12, which includes crushing the discarded lithium ion batteries.

The detoxification step S11 (also referred to as detoxification treatment) is performed in order to prevent explosion of discarded lithium ion batteries, to detoxify discarded lithium ion batteries, and to remove outer cases. Lithium ion batteries have a sealed system in which the electrolytic solution and other components are contained. Crushing or processing intact lithium ion batteries is dangerous because of the risk of explosion. Thus, some measures should preferably be taken for electric discharge and for removal of the electrolytic solution. In many cases, the outer case of the discarded lithium ion battery includes a metal, such as aluminum (Al) or iron (Fe), and such a metallic outer case is relatively easy to recover directly. Thus, the detoxification step S11 may include removing the electrolytic solution and the outer case, which will increase the safety and the recovery ratio of valuable metals (Cu, Ni, and Co).

The detoxification treatment may be performed using any specific method. For example, the detoxification treatment method may include mechanically opening holes in the discarded lithium ion batteries with needle-shaped blades to allow the electrolytic solution to flow out. Alternatively, the detoxification treatment method may include heating the discarded lithium ion batteries to burn the electrolytic solution and thereby to detoxify them.

The crushing step S12 includes crushing the components of the discarded lithium ion batteries, resulting from the detoxification treatment, to obtain a crushed product. The resulting crushed product is used as a raw material to be subjected to melting (molten alloy production). The crushing step S12 is performed in order to increase the efficiency of the reaction during a pyrometallurgical smelting process. Such an increase in the reaction efficiency will lead to an increase in the recovery ratio of valuable metals (Cu, Ni, and Co) .

Any specific crushing method may be used. The crushing may be performed using a conventionally known crushing machine, such as a cutter mixer.

Al and Fe may be recovered from the outer cases of the discarded lithium ion batteries. In such a case, the crushed product may be sieved using a sieve shaker. When made of Al, the outer cases can be easily crushed with low power into particles, so that Al can be efficiently recovered. Magnetic force sorting may also be used to recover Fe from the outer cases.

### Preheating Step

If necessary, the molten alloy preparation step S2 including the melting step S21 described later may be preceded by the step of preheating (oxidatively roasting) the crushed discarded lithium ion batteries (crushed product) to produce a preheated product (preheating step).

The preheating step (oxidative roasting step) will reduce the carbon content of the discarded lithium ion batteries. In a case where the discarded lithium ion batteries contain an excessive amount of carbon, this step will remove such an amount of carbon by oxidation and thus accelerate the integration of valuable metals into an alloy in the subsequent melting step S21.

In the melting step in which the valuable metals are reduced to form localized molten fine particles, carbon can physically interfere with the gathering of molten fine particles (valuable metals). In such a case, carbon may interfere with the gathering of molten fine particles and thus interfere with the separability between the alloy (metallic material) and the slag, which may lead to a reduction in valuable metal recovery ratio. On the other hand, the previous removal of carbon through the oxidation in the preheating step will facilitate the gathering of molten fine particles in the melting step and increase the valuable metal recovery ratio. The existence of an excessive amount of carbon may also cause phosphorus (P), which is an easily reducible impurity contained in the discarded lithium ion batteries, to undergo reduction reaction and thereby to be incorporated into the alloy together with valuable metals. In this regard, the previous removal of excessive carbon by the preheating step will prevent alloy contamination with phosphorus. In this regard, the carbon content of the preheated product (the crushed product obtained after the preheating treatment) is preferably less than 1% by mass.

Moreover, the preheating step, if performed, will prevent uneven oxidation. The preheating step preferably includes performing the treatment (oxidative roasting) at a degree of oxidation that allows the less valuable metal (e.g., Al) in the discarded lithium ion batteries to undergo oxidation. The degree of oxidation can be easily controlled by controlling the temperature, time, and/or atmosphere of the preheating treatment.

The degree of oxidation may be controlled, for example, as described below. In general, aluminum (Al), lithium (Li), carbon (C), manganese (Mn), phosphorus (P), iron (Fe), cobalt (Co), nickel (Ni), and copper (Cu) preferentially oxidize in the order of Al > Li > C > Mn > P > Fe > Co > Ni > Cu. The preheating step may include allowing oxidation to proceed until the whole amount of Al is oxidized. The oxidation may be accelerated to such an extent that Fe is partially oxidized, but the degree of oxidation should be kept at such a level that oxidation and distribution of Co into slag are prevented.

The preheating treatment is preferably carried out in the presence of an oxidizing agent. This allows removal of the carbon (C) impurity by oxidation and allows efficient oxidation of Al. The oxidizing agent may be any type. For ease of handling, the oxidizing agent is preferably an oxygen-containing gas (e.g., air, pure oxygen, an oxygen-rich gas). For example, the oxidizing agent is preferably introduced in an amount approximately 1.2 times the chemical equivalent of the oxidizing agent required to oxidize all oxidation target substances.

The preheating treatment temperature (heating temperature) is preferably 600°C or more, more preferably 700°C or more. At such a heating temperature, carbon can be oxidized with higher efficacy, and the heating can be performed for a shorter period of time. The heating temperature is preferably 900°C or less. At such a heating temperature, the thermal energy cost can be kept low, and the preheating can be performed with high efficiency.

The preheating treatment may be performed using a known roasting furnace. The preheating treatment is preferably performed in a preliminary furnace different from the melting furnace for use in the subsequent melting step S21. The preheating furnace may be any type capable of roasting the material introduced therein while supplying the oxidizing agent (e.g., oxygen) for the oxidation treatment in its interior. The preheating furnace may be, for example, a conventionally known rotary kiln or tunnel kiln (hearth-type furnace).

### Molten Alloy Preparation Step

The molten alloy preparation step S2 includes melting the discarded lithium ion batteries to form a molten alloy M (a molten alloy including Cu, Ni, and Co). The molten alloy preparation step S2 includes: a melting step S21, which includes melting the crushed components of the discarded lithium ion batteries; a collection step S22, which includes collecting an alloy including valuable metals by separating slag from the molten material; and a molten alloy production step S23, which includes turning the collected alloy into a molten alloy M.

The melting step S21 may include: introducing the raw material (the crushed components of the discarded lithium ion batteries or the preheated product) into a melting furnace; and melting the raw material by heating to form an alloy (metallic material) including Cu, Ni, and Co as constituents and to form a slag, which lies above the alloy. Specifically, the raw material is heated to form a molten material. The molten material includes an alloy and a slag in a molten state. Then, the resulting molten material is converted to a solidified molten material. The solidified molten material includes the alloy and the slag each in a solidified state.

The alloy mainly includes valuable metals. Thus, the valuable metals and other components can be separated into the alloy and the slag, respectively. This is attributable to the fact that the less valuable metals (e.g., Al) have a high affinity for oxygen while the valuable metals have a low affinity for oxygen. In general, for example, aluminum (Al), lithium (Li), carbon (C), manganese (Mn), phosphorus (P), iron (Fe), cobalt (Co), nickel (Ni), and copper (Cu) preferentially oxidize in the order of Al > Li > C > Mn > P > Fe > Co > Ni > Cu. Namely, among them, aluminum (Al) is most prone to oxidation, while copper (Cu) is most resistant to oxidation. Therefore, the less valuable metals (e.g., Al) easily undergo oxidation to form a slag, while the valuable metals (Cu, Ni, and Co) undergo reduction to form an alloy. Thus, the less valuable metals and the valuable metals can be separated into the slag and the alloy, respectively.

During the melting of the raw material, the oxygen partial pressure may be controlled. The oxygen partial pressure may be controlled by a known method. For example, such a method includes introducing a reducing agent or an oxidizing agent into the raw material or the molten material resulting from the melting of the raw material. The reducing agent may be a high-carbon-content material (e.g., graphite powder, graphite granules, coal, coke) or carbon monoxide. A high-carbon-content component may be selected from the raw material and used as the reducing agent. The oxidizing agent may be an oxidizing gas (e.g., air, oxygen) or a low-carbon-content material. A low-carbon-content component may be selected from the raw material and used as the oxidizing agent.

The reducing or oxidizing agent may be introduced by a known method. When in a solid state, the reducing or oxidizing agent may be introduced directly into the raw material or the molten material. When in a gaseous state, the reducing or oxidizing agent may be introduced into the melting furnace through an inlet, such as a lance, attached to the melting furnace. The reducing or oxidizing agent may be introduced at any suitable time. The reducing or oxidizing agent may be introduced simultaneously with the raw material into the melting furnace or may be introduced into the molten material resulting from the melting of the raw material.

The melting step S21 may include introducing (adding) a flux. The addition of a flux will lower the melting temperature and reduce the energy cost. The addition of a flux will further facilitate the removal of phosphorus (P). The flux is preferably a material including an element capable of combining with an impurity element to form a low-melting- point, basic oxide. For example, phosphorus can be oxidized into an acidic oxide. As the slag resulting from the melting becomes basic, therefore, the phosphorus becomes easy to enter the slag and thus easy to remove. In particular, the flux more preferably includes a calcium compound that is inexpensive and stable at room temperature. Examples of such a calcium compound include calcium oxide (CaO) and calcium carbonate (CaCO₃).

In the melting step, the heating temperature, at which the raw material is melted, is preferably, but not limited to, 1,400°C or more and 1,600°C or less, more preferably 1,450°C or more and 1,550°C or less. At a heating temperature of 1,400°C or more, the valuable metals (Cu, Co, and Ni) will be sufficiently molten and kept in a highly fluid state when forming an alloy. This increases the efficiency of the separation of the alloy and the slag in the collection step S22 described later. The heating temperature is more preferably 1,450°C or more, at which the alloy will have higher fluidity, which will further increase the efficiency of separation between impurity components and valuable metals. At a heating temperature above 1,600°C, unnecessary consumption of thermal energy may occur, and heavy deterioration of a refractory component, such as a crucible or a furnace wall, may occur to reduce productivity.

The collection step S22 may include: separating the slag from the molten material resulting from the melting step S21; and collecting, as an alloy raw material, the alloy including valuable metals. The slag and the alloy have different specific gravities. The slag, which has a specific gravity lower than that of the alloy, gathers above the alloy. Thus, the slag can be easily separated and collected by specific gravity separation. The treatment in the collection step S22 produces an alloy raw material including Cu, Ni, and Co as constituents.

The molten alloy production step S23 includes melting the collected alloy raw material by heating to produce a molten alloy M. Specifically, the molten alloy production step S23 may include: placing the prepared alloy raw material in a melting furnace (a crucible furnace); and heating the alloy raw material to produce a flowable molten material (molten alloy M). To produce an alloy powder as desired in the alloy powder production step S3 described later, the heating and melting temperature is preferably 1,450°C or more and 1,550°C or less. The treatment in the molten alloy production step S23 successfully produces a molten alloy M including Cu, Ni, and Co as constituents.

### Alloy Powder Production Step

The alloy powder production step S3 includes producing an alloy powder (atomized powder) by atomization using the atomizer 1. Specifically, the alloy powder production step S3 includes: pouring the molten alloy M, which has been produced in the melting furnace 5, into the tundish 11 of the atomizer 1; allowing the molten alloy M to freely fall at a specific feed rate from the tundish 11 into the chamber 13; and spraying a fluid, such as high-pressure water or high-pressure gas, onto the falling molten alloy M to crush it into molten droplets. In the chamber 13, the dispersed molten droplets resulting from the crushing are rapidly cooled and solidified to form an alloy powder.

The valuable metal recovery method according to the embodiment is characterized by including the alloy powder production step S3, which includes producing an alloy powder using the atomizer 1 with the configuration described in detail above. Specifically, the alloy powder is produced using the atomizer 1 including: a tundish 11 having an interior into which the molten alloy M is poured and having a discharge nozzle 11N provided at its bottom 11b to discharge the molten alloy M, at least the interior of the tundish being shaped such that when poured into the interior from the melting furnace 5, the molten alloy M has a surface area that increases as the surface shifts in the direction from the bottom to the top of the tundish 11; and fluid spray nozzles 12 that are provided under the tundish 11 to spray a fluid onto the molten alloy M falling from the tundish 11.

The atomizer 1 further includes: a measurement unit 31 that determines the level of the surface Ms of the molten alloy M in the tundish 11 (the surface level Mh); and a control unit 32 that controls the amount of the molten alloy M being poured into the tundish 11 on the basis of the surface level Mh determined by the measurement unit 31, in which the control unit 32 controls the amount of the molten alloy M being poured into the tundish 11 by automatically controlling the tilt angle of the melting furnace 5 in such a way as to keep the surface level Mh substantially constant at a predetermined level.

The specific configuration of the atomizer 1 is as described in detail above and thus will not be repeatedly described in this section.

In the alloy powder production step S3, an alloy powder is produced using the atomizer 1, which keeps substantially constant the surface level of the molten alloy M in the tundish 11 and thus stabilizes the supply of the molten alloy M from the tundish 11. Thus, the stabilization of the supply of the molten metal M results in less variation in the particle size of the metal powder produced by spraying the fluid onto the molten alloy M. The alloy powder produced with less variation in particle size in this manner undergoes acid leaching with an effectively increased efficiency of leaching of valuable metals, such as Ni and Co, in the acid leaching step S4 described later.

In this step, the molten alloy supplied to the atomizer 1 to produce a metal powder is derived from discarded lithium ion batteries as mentioned above and includes Cu, Ni, and Co, which are constituents of the batteries, and includes at least manganese (Mn) and iron (Fe) as impurity components. The mass content of these metal elements in the molten alloy should not be limited. For example, the molten alloy contains 0.1% by mass or more of each of the five metal elements: Cu, Ni, Co, Mn, and Fe, and the total content of the five metal elements in the molten alloy is 98% by mass or more. The mass content of Cu in the molten alloy is, for example, approximately 24% by mass or more and approximately 80% by mass or less.

The temperature of the molten alloy with such metal contents should not be limited. For example, the molten alloy is preferably poured at a temperature controlled in the range of (1,383 + 1.9 x T)°C or more and (1483 + 1.9 x T)°C or less, in which T is the total content (% by mass) of Ni, Co, Mn, and Fe, into the atomizer 1. Such temperature control adequately maintains the molten state of the molten alloy and enables the atomizer 1 to produce an alloy powder with much less variation in particle size.

The molten alloy production step S23 described above may include controlling the temperature of the molten alloy in a melting furnace (the melting furnace 5 shown in FIG. 1) under the temperature conditions for the production of the molten alloy. Alternatively, after the production of the molten alloy, a temperature control step may be independently performed which includes heating the molten alloy with a heat source so as to control the temperature of the molten alloy. For example, the melting furnace 5 may include an induction furnace in which heat energy is efficiently applied with specific frequency power.

Before the pouring of the molten alloy M from the melting furnace 5 into the tundish 11 of the atomizer 1, the interior of the empty tundish 11 may be heated to 1000°C or more, for example, using an LPG (liquefied petroleum gas) burner. This eliminates a temperature difference that would otherwise occur between the molten alloy M stored in the tundish 11 and the molten alloy M produced in the melting furnace, prevents a reduction in the temperature of the molten alloy M poured into the tundish 11, and keeps the suitable temperature.

Furthermore, the ratio of the average mass of high-pressure water being sprayed per unit time onto the molten alloy M to the average mass of the molten alloy M falling per unit time, the average mass of the molten alloy M falling per unit time, and the pressure at which the high-pressure pump 17 supplies water to be sprayed onto the molten alloy M may be controlled within specific ranges for the production of an alloy powder with less variation in particle size. For example, the average mass of high-pressure water being sprayed per unit time onto the molten alloy M may be, for example, approximately 5.0 to approximately 7.0 times the average mass of the molten alloy M falling per unit time. The average mass of the molten alloy M falling per unit time may be approximately 10 kg/min to approximately 75 kg/min. The high-pressure pump 17 may supply water at a pressure of approximately 8 MPa to approximately 20 MPa for the spray of water onto the molten alloy M. The chiller 19 is used to cool, to a constant temperature, the water to be sprayed.

### Acid Leaching Step

The acid leaching step (valuable metal recovery step) S4 includes subjecting the produced alloy powder to leaching treatment with an acid solvent to selectively dissolve nickel Ni and Co from the alloy powder into the acid solvent. This step also allows separation of copper (Cu) from Ni and Co. In this way, the valuable metals Ni and Co are recovered separate from Cu.

The acid solvent may be a known acid solution for use in recovery of valuable metals. Such an acid solution includes, for example, sulfuric acid, hydrochloric acid, or nitric acid. For example, the acid solution includes sulfuric acid, and the acid leaching step includes immersing the alloy powder in the sulfuric acid solution to dissolve Ni and Co from the alloy powder into the sulfuric acid solution, in which Ni and Co turn into nickel sulfate and cobalt sulfate, respectively. Meanwhile, Cu from the alloy powder turns into copper sulfate, which has low solubility and thus precipitates as a residue. Thus, the Cu component (copper sulfate) is separated and recovered in the form of precipitates from the solution containing Ni and Co.

As described above, the alloy powder production step S3 produces a metal powder with less variation in particle size. Such a metal powder features a high ability to undergo acid leaching and a high ability to undergo separation and recovery. Thus, the valuable metal recovery method according to the embodiment, which includes producing such a metal powder using the atomizer 1, successfully leaches the valuable metals Ni and Co with high leaching rate and successfully separates Ni and Co from Cu with high separation performance and successfully recovers them.

### EXAMPLES

Hereinafter, the present invention will be described more specifically with reference to examples, which are not intended to limit the present invention at all.

### Examples and Comparative Examples

### Examples

In the examples and the comparative examples, intermediate scrap from lithium ion battery factories and discarded and detoxified, used lithium ion batteries, which were available from the discarded battery market, were used to prepare a discarded battery sample (discarded battery pretreatment step S1), which was then subjected to the molten alloy preparation step S2 to form a molten alloy. The resulting molten alloy was then subjected to the alloy powder production step S3 to produce an alloy powder including copper (Cu), nickel (Ni), and cobalt (Co) as constituents.

The alloy powder production step S3 was performed using the atomizer 1 configured as shown in FIG. 1. Specifically, the atomizer 1 was a water atomizer having a tundish 11 with an inverted truncated conical interior, which is shaped such that when poured into the interior, the molten alloy M has a surface area that increases as the surface shifts in the direction from the bottom to the top of the tundish 11. More specifically, the atomizer 1 used in Examples 1 to 4 is a water atomizer having a tundish 11 with an interior having a cross-sectional shape as shown in FIG. 2 and having an opening 11a with a diameter R¹ and a bottom 11b with a diameter R², with the ratio (R²/R¹) of the diameter R² to the diameter R¹ being 0.5 (designated as "inverted truncated cone 1" in Table 2 below). The atomizer 1 used in Example 5 is a water atomizer having a tundish 11 with an interior having a cross-sectional shape as shown in FIG. 3 and having an opening 11a with a diameter R¹ and a bottom 11b with a diameter R², with the ratio (R²/R¹) of the diameter R² to the diameter R¹ being 0.3 (designated as "inverted truncated cone 2" in Table 2 below).

In the water atomizer 1, the tundish 11 is made of alumina and has a 4 mm to 8 mm-diameter discharge nozzle 11N made of zirconia and attached to its bottom 11b.

The water atomizer 1 further includes: a measurement unit 31 that determines the surface level Mh of the molten alloy M in the tundish 11; and a control unit 32 that controls the amount of the molten alloy M being poured into the tundish 11 on the basis of the determined surface level Mh, in which the control unit 32 controls the amount of the molten alloy M being poured into the tundish 11 by automatically controlling the tilt angle of the melting furnace 3 in such a way as to keep the surface level Mh substantially constant at a predetermined level.

In the water atomizer 1, the means (measurement unit 31) that determines the surface level Mh of the molten alloy M stored in the tundish 11 is provided above the tundish 11. More specifically, the surface level Mh measurement means used in Examples 1, 2, and 5 is a video camera, which captures an image through a light protecting glass, which is provided between the video camera and the tundish 11 for exposure control and for clear observation of the contour of the top surface of the molten alloy M in the tundish 11. The top surface of the molten alloy M in the tundish 11 in the shape of an inverted cone was observed as a circle. An arithmetic expression of the relationship between the diameter of the circle and the surface level Mh of the molten alloy M was created in advance and used to calculate the surface level Mh of the molten alloy M in the tundish 11 from the diameter of the circle. In this case, however, image processing for clarifying the contour of the top surface of the molten alloy M in the tundish 11 was performed to convert the image into a binary or multivalued image, with which the area of the circle (not the diameter of the circle) was digitized, and an arithmetic expression of the relationship between the area of the circle and the surface level Mh of the molten alloy M was created in advance and used.

The information representing the surface level Mh calculated by the measurement unit 31 was sent to the control unit 32, which then automatically controlled the amount of the molten alloy M being poured from the melting furnace 5 into the tundish 11 by controlling the tilt angle of the melting furnace 5 to keep substantially constant the surface level Mh of the molten alloy M in the tundish 11. This operation also kept constant the supply of the molten alloy M from the tundish 11 to the water atomization.

The surface level Mh measurement means used in Examples 3 and 4 is a thermographic device, which directly captures a thermal image with a clear contour of the top surface of the molten alloy M in the tundish 11. The thermographic device detected infrared radiation from the interior of the tundish 11 to successfully capture a thermal image of the temperature distribution. In this case, the surface level Mh was calculated from the contour of the top surface of the molten alloy M in the tundish 11. Since the tundish 11 was in the shape of an inverted cone, the surface level Mh was easily determined from the contour of the top surface of the molten alloy M in the tundish 11 using a relational expression between the actual surface level Mh and the contour, which was created in advance.

The alloy powder production step S3 included: controlling the temperature of the molten alloy using an induction furnace (as the melting furnace 5) with power at a frequency of 400 Hz; tilting the induction furnace 5 to pour the molten alloy M into the tundish 11 with an inverted truncated conical interior; keeping substantially constant the surface level of the molten alloy M in the tundish 11; and supplying the molten alloy M into the chamber 13 of the water atomizer 1 while keeping constant the amount of the molten alloy M being discharged per unit time through the discharge nozzle 11N. In this step, the information representing the surface level Mh of the molten alloy M in the tundish 11, which was determined by the measurement unit 31, was sent to the control unit 32, which then controlled the tilt of the tilting device, which tilted the induction furnace 5 to pour the molten alloy M into the tundish 11.

The control unit 32 controlled the tilt of the tilting device by controlling the supply of hydraulic oil for driving the hydraulic cylinder and controlling the release of the hydraulic pressure. More specifically, upon determining that the determined surface level Mh was lower than the lower limit of the target level, the control unit 32 drove the hydraulic oil pump to increase the tilt angle of the tilting device and thus to tilt the induction furnace 5, which increased the amount of the molten alloy M being poured, so that the surface level Mh of the molten alloy M was automatically raised to the target level. Upon determining that the surface level Mh reached the upper limit of the target level, the control unit 32 caused the tilting device to drain the hydraulic oil from the hydraulic cylinder and thereby to release the hydraulic pressure, so that the tilt of the induction furnace 5 was reduced to reduce the amount of the molten alloy M being poured. These operations were repeated to adjust the surface level Mh between the upper and lower limit levels and thereby to keep constant the amount of the molten alloy falling per unit time from the tundish 11.

Before the pouring of the molten alloy M from the induction furnace 5 into the tundish 11, the interior of the tundish 11 was heated to 1,000°C or more with an LPG burner in advance so that the molten alloy M being discharged through the discharge nozzle 11N of the tundish 11 could have substantially the same temperature as the molten alloy M in the induction furnace 5.

In the water atomizer 1, the molten alloy was supplied in a substantially constant amount from the tundish 11 into the chamber 13 through the discharge nozzle 11N, and high-pressure water was sprayed from the fluid spray nozzles 12, which were provided at the top of the chamber 13, onto the molten alloy falling from the discharge nozzle 11N to crush the molten alloy into molten droplets, which gave an alloy powder. After being produced in the chamber 13, the alloy powder was transferred to the filter 15 through the collection pipe 14, and collected by solid-liquid separation with the filter 15.

### Comparative Examples

In Comparative Example 1, an alloy powder was produced as in the examples, except that the water atomizer used had a tundish 100 with a cylindrical interior having a cross-section as shown in FIG. 4 and that no measurement unit was provided for determining the surface level of the molten alloy in the tundish 100.

In Comparative Examples 2 and 3, an alloy powder was produced as in the examples, except that the water atomizer used had the device shown below for determining the surface level of the molten alloy stored in the tundish.

Specifically, in Comparative Example 2, the surface level of the molten alloy was measured using sound waves. Unfortunately, sound waves, the velocity of which increases with increasing temperature, were not useful because the measurement of the surface level using sound waves was strongly affected by the temperature of the air within the measurement range so that the measurement result differed between high and low temperature cases. Sound waves were not useful also because when air flow occurred in the factory, the result of calculation of the surface level varied depending on the direction and intensity of the air flow and because it was not possible to insert, between the measurement device and the tundish, a heat ray shielding plate or any other member for reducing the influence of the heat radiation or thermal current from the tundish.

In Comparative Example 3, an attempt was made to measure the weight of the tundish so that changes in the weight of the tundish could be used to determine the weight of the molten alloy in the tundish and thus to calculate the surface level. Unfortunately, it was impossible to install any means for measuring the weight of the tundish because the tundish and the water atomization chamber should be integrated together and sealed against inflow of air for the prevention of hydrogen explosion. An attempt was also made to measure the weight of the system including the chamber. Unfortunately, it was impossible to accurately detect changes in the surface level from changes in the weight of the system because the weight of the molten alloy in the tundish was too small relative to the weight of the system, which also included the weight of the water and the powder.

### Results and Evaluation

Table 1 below shows the composition of the molten alloy in the experiment of each of Examples 1 to 5 and Comparative Examples 1 to 3. Table 1 shows the contents of components, excluding gaseous components (carbon, nitrogen, and oxygen), which were determined by chemical quantitative analysis.

**[Table 1]**

| | | Composition[% by mass] | | | | | | |
|---|---|---|---|---|---|---|---|---|
| | | Ni | Cu | Co | Fe | Mn | Remainder | (Remainder elements) |
| Example | 1 | 11.3 | 75.4 | 11.4 | 1.5 | 0.4 | <0.01 | - |
| | 2 | 12.2 | 73.7 | 12.5 | 1.5 | 0.1 | <0.01 | - |
| | 3, 5 | 33.6 | 61.4 | 2.9 | 0.96 | 0.097 | 0.1 | P, W, Cr, Zn, Si |
| | 4 | 45.8 | 43.9 | 5.1 | 3.1 | 1.9 | 0.2 | P, W, Cr, Zn, Si |
| Comparative Example | 1 | 11.3 | 75.4 | 11.4 | 1.5 | 0.4 | <0.01 | - |
| | 2 | 12.2 | 73.7 | 12.5 | 1.5 | 0.1 | <0.01 | - |
| | 3 | 33.6 | 61.4 | 2.9 | 0.96 | 0.097 | 0.1 | P, W, Cr, Zn, Si |

Table 2 below shows the conditions for the alloy powder production in the experiment of each of Examples 1 to 5 and Comparative Example 1 and shows the results of the experiment.

The experiment included evaluation of: the presence or absence of any abnormality during the production of the alloy powder (atomized powder) under the conditions; the particle size distribution of the alloy powder produced; and the efficiency of the acid leaching performed on the alloy powder.

As for abnormality during the atomization, it was observed whether the discharge nozzle 11N clogged during the atomization. In the evaluation, the case where clogging occurred was interpreted as the presence of abnormality (expressed as "present" in the table), and the case where no clogging occurred was interpreted as the absence of abnormality (expressed as "absent" in the table).

As for the particle size distribution of the alloy powder, the case where the resulting alloy powder contained neither coarse particles with sizes of at least 300 um nor fine particles with sizes of less than 5 um was evaluated as good (represented by the mark "o" in the table), and the case where the resulting alloy powder contained such coarse particles and/or such fine particles was evaluated as poor (represented by the mark "x" in the table).

As for the efficiency of acid leaching, the alloy powder produced in each experiment, which included Cu, Ni, and Co as constituents, was subjected to acid leaching by being immersed in a sulfuric acid solution. The efficiency of the acid leaching was evaluated as good (represented by the mark "o" in the table) when Ni and Co dissolved with a dissolution rate (leaching rate) of at least 98% from the powder within 6 hours from the start of the leaching, and evaluated as poor (represented by the mark "x" in the table) when Ni and Co dissolved with a dissolution rate of less than 98% from the powder within 6 hours from the start of the leaching. The sulfuric acid solution was used in an amount that gave 2.0 to 3.0 times the equivalent of sulfuric acid required to dissolve Ni and Co and convert them sulfates.

**[Table 2]**

| | | Discharge nozzle diameter [mm] | Molten alloy temperature [°C] | Tundish shape | Abnormality during atomization | Particle size distribution | Acid leaching efficiency | Evaluation |
|---|---|---|---|---|---|---|---|---|
| Example | 1 | 4 | 1490 | Inverted truncated cone [1] | Absent | ○ | ○ | ○ |
| | 2 | 4 | 1495 | Inverted truncated cone [1] | Absent | ○ | ○ | ○ |
| | 3 | 4 | 1510 | Inverted truncated cone [1] | Absent | ○ | ○ | ○ |
| | 4 | 4 | 1550 | Inverted truncated cone [1] | Absent | ○ | ○ | ○ |
| | 5 | 8 | 1460 | Inverted truncated cone [2] | Absent | ○ | ○ | ○ |
| Comparative Example | 1 | 4 | 1500 | Cylinder | Absent | x | x | x |
| | 2 | - | - | - | - | - | - | - |
| | 3 | - | - | - | - | - | - | - |

In each of Examples 1 to 4, the alloy powder produced using the tundish 11 with an inverted truncated conical interior contained neither coarse particles with sizes of at least 300 um nor fine particles with sizes of less than 5 um. When the alloy powder produced in each of Examples 1 to 4 was subjected to the acid leaching, at least 98% of Ni and Co were successfully dissolved within 6 hours. During the atomization, the process was successful without any abnormality such as clogging.

In Example 5, not only the alloy powder produced using the tundish 11 with an inverted truncated conical interior contained neither coarse particles with sizes of at least 300 um nor fine particles with sizes of less than 5 µm, but also the alloy powder had a low content of fine particles with a size of 5 um or more and exhibited a sharper particle size distribution. This is attributable to the fact that in Example 5, the alloy powder was produced using the tundish 11 substantially in the shape of an inverted cone with an R²/R¹ ratio smaller than that of the tundish used in Examples 1 to 4, in which fluctuations in the supply of the molten alloy from the discharge nozzle 11N were small even in the stage in which only a small amount of the molten alloy remained in the tundish 11. When the alloy powder produced in Example 5 was subjected to the acid leaching, at least 98% of Ni and Co were successfully dissolved within 6 hours. During the atomization, the process was successful without any abnormality such as clogging.

On the other hand, in Comparative Example 1, the alloy powder produced using the tundish 100 with a conventional cylindrical shape, without measuring the surface level of the molten alloy, contained coarse particles with sizes of at least 300 um and fine particles with sizes of less than 5 µm, although no abnormality such as clogging occurred during the atomization. When the alloy powder produced in Comparative Example 1 was subjected to the acid leaching, the rate of dissolution of Ni and Co remained less than 98% within 6 hours.

### EXPLANATION OF REFERENCE NUMERALS

1: Atomizer (water atomizer)
11, 11A, 11B: Tundish
11a: Opening
11b: Bottom
11N: Discharge nozzle
12: Fluid spray nozzle
13: Chamber
13e: Outlet
14: Collection pipe
15: Filter
16: Tank
17: High-pressure pump
18: Gas discharge structure
21: Slope portion
31: Measurement unit
32: Control unit
5: Melting furnace (induction furnace)

## Claims

1. An atomizer for producing a metal powder by spraying a fluid onto a molten metal, the atomizer comprising:
a tundish having an interior into which the molten metal is to be poured and having a discharge nozzle provided at its bottom to discharge the molten metal, at least the interior of the tundish being shaped such that when poured into the interior, the molten alloy has a surface area that increases as the surface shifts in a direction from a bottom to a top of the tundish;
a fluid spray nozzle that is provided under the tundish to spray the fluid onto the molten metal falling from the tundish;
a means for capturing an image of an interior of the tundish and for determining the surface level of the molten metal in the tundish from the image; and
a means for calculating, from the determined surface level, the amount of the molten metal to be poured into the tundish and for pouring the calculated amount of the molten metal into the tundish in such a way as to keep the surface level substantially constant.

2. The atomizer according to claim 1,
wherein the means for determining the surface level of the molten metal in the tundish captures a thermal image from infrared radiation from an interior of the tundish and uses the thermal image to determine the surface level.

3. The atomizer according to claim 1 or 2,
wherein the fluid is high-pressure water, and the fluid spay nozzle sprays the high-pressure water.

4. The atomizer according to any one of claims 1 to 3,
wherein the molten metal comprises copper, nickel, and cobalt, and
wherein the metal powder comprises an alloy powder comprising copper, nickel, and cobalt as constituents.

5. The atomizer according to claim 4,
wherein the atomizer is for use in production of an alloy powder to be subjected to acid leaching in a process for recovering valuable metals from discarded lithium ion batteries.

6. A metal powder production method comprising producing a metal powder by spraying a fluid onto a molten metal using an atomizer comprising:
a tundish having an interior into which the molten metal is poured and having a discharge nozzle provided at its bottom to discharge the molten metal, at least the interior of the tundish being shaped such that when poured into the interior, the molten metal has a surface area that increases as the surface shifts in a direction from a bottom to a top of the tundish;
a fluid spray nozzle that is provided under the tundish to spray the fluid onto the molten metal falling from the tundish;
a means for capturing an image of an interior of the tundish and for determining the surface level of the molten metal in the tundish from the image; and
a means for calculating, from the determined surface level, the amount of the molten metal to be poured into the tundish and for pouring the calculated amount of the molten metal into the tundish in such a way as to keep the surface level substantially constant.

7. The metal powder production method according to claim 6,
wherein the molten metal comprises copper, nickel, and cobalt, and
wherein the metal powder is an alloy powder comprising copper, nickel, and cobalt as constituents.

8. A method for producing valuable metals from discarded lithium ion batteries, the method comprising:
producing an alloy powder comprising copper, nickel, and cobalt as constituents from a molten alloy derived from discarded lithium ion batteries; and
subjecting the alloy powder to acid leaching,
wherein in a step of producing the alloy powder, an atomizer which produces the alloy powder by spraying a fluid to the molten alloy is used, and,
wherein the atomizer comprises:
a tundish having an interior into which the molten alloy is poured and having a discharge nozzle provided at its bottom to discharge the molten alloy, at least the interior of the tundish being shaped such that when poured into the interior, the molten alloy has a surface area that increases as the surface shifts in a direction from a bottom to a top of the tundish;
a fluid spray nozzle that is provided under the tundish to spray the fluid onto the molten alloy falling from the tundish;
a means for capturing an image of an interior of the tundish and for determining the surface level of the molten alloy in the tundish from the image; and
a means for calculating, from the determined surface level, the amount of the molten alloy to be poured into the tundish and for pouring the calculated amount of the molten alloy into the tundish in such a way as to keep the surface level substantially constant.
